(19)

Europäisches
Patentamt
European
Patent Office
Office européen
des brevets

(11) **EP 2 804 437 B1**

(12) **EUROPEAN PATENT SPECIFICATION**

(45) Date of publication and mention
of the grant of the patent:
**20.04.2016 Bulletin 2016/16**

(21) Application number: **12732428.3**

(22) Date of filing: **15.02.2012**

(51) Int Cl.:
**H04L 12/917** *(2013.01)*     **H04L 12/28** *(2006.01)*

(86) International application number:
**PCT/CN2012/071165**

(87) International publication number:
**WO 2012/092905 (12.07.2012 Gazette 2012/28)**

(54) **METHOD AND DEVICE FOR RESOURCE ALLOCATION**

VERFAHREN UND VORRICHTUNG ZUR RESSOURCENZUWEISUNG

PROCÉDÉ ET DISPOSITIF D'ALLOCATION DE RESSOURCES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.11.2014 Bulletin 2014/47**

(73) Proprietor: **Huawei Technologies Co., Ltd.
Longgang District
Shenzhen, Guangdong 518129 (CN)**

(72) Inventors:
• **PIKHLETSKY, Mikhail
Shenzhen
Guangdong 518129 (CN)**

• **TANG, Zhihua
Shenzhen
Guangdong 518129 (CN)**

(74) Representative: **Pfenning, Meinig & Partner mbB
Patent- und Rechtsanwälte
Joachimsthaler Straße 12
10719 Berlin (DE)**

(56) References cited:
**EP-A2- 0 932 280      CN-A- 101 436 891
CN-A- 101 795 496      CN-A- 102 026 388
US-A1- 2005 169 313    US-A1- 2005 259 664
US-A1- 2009 116 439**

## Description

### TECHNICAL FIELD

The present invention relates to the field of communications, and in particular, to a resource allocation method and apparatus.

### BACKGROUND

Provided that system resources are fixed, a tradeoff exists between an average cell edge throughput and an average system throughput. On one hand, a channel condition of cell edge users is poor, and to achieve the same user experience as that of cell center users, the cell edge users need more system resources than the cell center users with a good channel condition. On the other hand, an average throughput of a whole system mainly depends on throughputs of the cell center users, and if excessive system resources are allocated to the cell edge users, user experience of other users and the average throughput of the whole system may be affected. Therefore, a method for trading off between the average cell edge throughput and the average system throughput is required, and such a tradeoff method actually reflects a certain degree of fairness among users.

US 2009/0116439 A1 discusses systems and methodologies that facilitate dynamically adjusting scheduling priorities in relation to a combination of delay sensitive flows with delay requirements and best effort flows.

In the prior art, an $\alpha$-fair utility function based scheduling algorithm that meets certain fairness requirements is proposed, which is a scheduling algorithm ensuring fairness among users. For example, user rates meet a certain ratio which is used to measure fairness among users. In the prior art, the fairness among users is measured by using a Jain's (Jain) fairness index, and the fairness index is defined as follows: $J\left(\overline{\mathbf{R}}\right) = \dfrac{\left(\sum_{k=1}^{K} \overline{\mathbf{R}}\left(k\right)\right)^{2}}{K \sum_{k=1}^{K} \overline{\mathbf{R}}\left(k\right)^{2}}$ , where $\overline{R}(k)$ indicates

an average rate of a user k, and the number of system users is K. A larger Jain's fairness index obtained indicates better fairness among system users; if the fairness index is small, it indicates that fairness among users is poor, and a system adjusts, according to the Jain's index, resources allocated to the users.

In implementation of the foregoing tradeoff method, the prior art at least has the following problems: Although system resources can be allocated according to measured system fairness according to the method that uses the fair utility function based on the Jain's fairness index, fairness among users cannot be effectively improved in a resource allocation process by using the foregoing fairness index, and as a result, resources cannot be properly allocated to the users.

### SUMMARY

Embodiments of the present invention provide a resource allocation method and apparatus, which are used to achieve an effective improvement of fairness among users, and further implement proper allocation of resources to users.

To achieve the foregoing objectives, the embodiments of the present invention adopt the following technical solutions:

A resource allocation method includes: updating a fairness parameter at a current moment according to a fairness parameter at a previous moment, an edge-to-average ratio at the previous moment, and a preset critical value, where the edge-to-average ratio is a ratio of an average cell edge throughput to an average system throughput, and the fairness parameter is not less than zero; obtaining, according to average user throughputs of users at the previous moment, the fairness parameter at the current moment, and channel conditions of the users at the current moment, an allocation scheme that maximizes system utility; and performing resource allocation according to the allocation scheme that maximizes the system utility, so that the edge-to-average ratio at the current moment is closer to the preset critical value when compared with the edge-to-average ratio at the previous moment.

The preset critical value is selected according to an empirical value and is a proper tradeoff point of the average cell edge throughput and the average system throughput.

A resource allocation apparatus includes: an updating unit, configured to update a fairness parameter at a current moment according to a fairness parameter at a previous moment, an edge-to-average ratio at the previous moment, and a preset critical value, where the edge-to-average ratio is a ratio of an average cell edge throughput to an average system throughput, and the fairness parameter is not less than zero; an obtaining unit, configured to obtain, according to average user throughputs of users at the previous moment, the fairness parameter at the current moment, and channel conditions of the users at the current moment, an allocation scheme that maximizes system utility; and an allocating unit, configured to perform resource allocation according to the allocation scheme that maximizes the system utility, so that the edge-to-average ratio at the current moment is closer to the preset critical value when compared with the edge-to-average ratio at the previous moment.

The embodiments of the present invention provide a resource allocation method and apparatus. A fairness parameter at a current moment is updated according to a fairness parameter and an edge-to-average ratio that are at the previous moment and a preset critical value, allocation weights at the current moment are updated according to the fairness parameter at the current moment and average throughputs of the users at the previous moment, an allocation scheme that maximizes the system utility is obtained by calculating according to the allocation weights of the users at the current moment and channel conditions of the users, and resource allocation is performed according to the allocation scheme. The resource allocation method and apparatus which use the edge-to-average ratio can use the edge-to-average ratio to update the fairness parameter, and reflect a qualitative relationship between key technical indexes, being the cell edge throughput and the average system throughput, in a resource allocation process, thereby achieving an effective improvement of fairness among users and further implementing proper allocation of resources to the users.

## BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is a flowchart of a resource allocation method according to an embodiment of the present invention;
FIG. 2 is a user throughput distribution CDF curve according to an embodiment of the present invention;
FIG. 3 is a specific flowchart of step 102 of the resource allocation method shown in FIG. 1.
FIG. 4 is a flowchart of a method of a specific embodiment of a resource allocation method according to an embodiment of the present invention;
FIG. 5 is a specific flowchart of step 402 of a specific embodiment of the resource allocation method shown in FIG. 4;
FIG. 6 is a schematic diagram of a simulated effect of an edge-to-average ratio and a fairness parameter according to an embodiment of the present invention;
FIG. 7 is a schematic diagram of a simulated effect of a user throughput according to an embodiment of the present invention; and
FIG. 8 is a schematic structural diagram of a resource allocation apparatus according to an embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

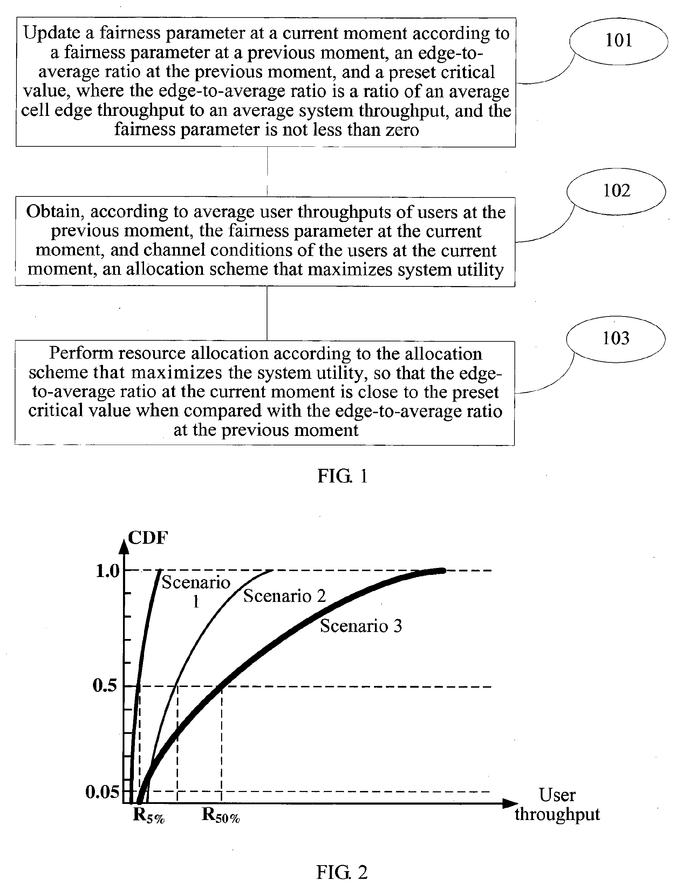

An embodiment of the present invention provides a resource allocation method, as shown in FIG. 1, including:

101: Update a fairness parameter at a current moment according to a fairness parameter at a previous moment, an edge-to-average ratio at the previous moment, and a preset critical value, where the edge-to-average ratio is a ratio of an average cell edge throughput to an average system throughput, and the fairness parameter is not less than zero.

Specifically, firstly, a corresponding fairness parameter update formula including the edge-to-average ratio is selected according to the preset critical value of the edge-to-average ratio and a utility function that is used. For example, the preset critical value of the edge-to-average ratio is $F_0$, and the system utility and fairness are controlled by using an $\alpha$-fair utility function; preferably, an update formula for updating the fairness parameter is: $\alpha[t] = \max[0, \alpha[t-1] + c_\alpha \cdot (F_0 - F[t-1])]$, where, t indicates any moment, $\alpha[t]$ indicates a fairness parameter at a t moment, $F[t-1]$ is an edge-to-average ratio at a t-1 moment, and $c_\alpha$ is an algorithm parameter and has a positive value. Then, except for a first moment (that is, when t=1), the fairness parameter at the current moment is obtained according to the fairness parameter at the previous moment, the edge-to-average ratio, and the preset critical value, where the fairness parameter is a number not less than zero. It can be known from the foregoing formula that, when a value of $\alpha[t-1] + c_\alpha \cdot (F_0 - F[t-1])$ is less than 0, a value of the fairness parameter $\alpha$ at the t moment is 0; when the value of $\alpha[t-1] + c_\alpha \cdot (F_0 - F[t-1])$ is greater than 0, a value of the fairness parameter $\alpha$ at the t moment is the value of $\alpha[t-1] + c_\alpha \cdot (F_0 - F[t-1])$.

It should be noted that, the first moment is an initial moment for updating the fairness parameter, and a value of the fairness parameter at the first moment may be preset or obtained by using another method, which is not limited in the present invention.

It should be noted that, the preset critical value is selected according to an empirical value and is a proper tradeoff point of the average cell edge throughput and the average system throughput; when an edge-to-average ratio of the system is close to the preset critical value $F_0$, the system takes both the fairness among users and proper tradeoff between the average cell edge throughput and the average system throughput into consideration, and when the edge-to-average ratio is $F_0$, an effect is optimal.

The edge-to-average ratio is the ratio of the average cell edge throughput to the average system throughput. The average cell edge throughput at a certain moment is an average value of average user throughputs of all or a part of edge users in the system at the moment; and the average system throughput at a certain moment is an average value of average user throughputs of all or a part of users in the system at the moment. As shown in FIG. 2, the edge-to-average ratio of the system may be reflected by a user throughput distribution CDF curve; in FIG. 2, a selected average cell edge throughput is a point of 5% of a CDF (Cumulative Distribution Function, cumulative distribution function) user throughput of a user throughput CDF curve, and a selected average system throughput is a point of 50% of the CDF user throughput of the user throughput CDF curve; in this case, for the edge-to-average ratio $F = \dfrac{\overline{R_{5\%}}}{\overline{R_{50\%}}}$, when the edge-to-average ratio F is close to 0, it indicates that the average cell edge throughput is very poor, the user throughput CDF curve is flat, which is like a curve in scenario 3, and system fairness is poor; when the edge-to-average ratio F is close to 1, it indicates that the average cell edge throughput is substantially equal to the average system throughput, the user throughput CDF curve is steep, which is like a curve in scenario 1, and in this case, the system fairness is good.

The edge user is a user that is in a cell and at an edge of coverage of a base station, and a center user is a user that is in the cell and close to the base station.

It should be noted that, when the user throughput distribution CDF curve reflects the edge-to-average ratio of the system, a point may be randomly selected as the average cell edge throughput, another point is randomly selected as the average system throughput, and a CDF of the average system throughput should be larger than a CDF of the cell edge throughput; for example, in the foregoing example, a point of 5% of the CDF user throughput of the user throughput distribution CDF curve is selected to indicate the average cell edge throughput, and a point of 50% of the CDF user throughput of the user throughput distribution CDF curve is selected to indicate the average system throughput; a point of 10% of the CDF user throughput of the user throughput distribution CDF curve may also be selected to indicate the average cell edge throughput, and a point of 90% of the CDF user throughput of the user throughput distribution CDF curve may also be selected to indicate the average system throughput, which is not limited in the present invention.

It should be noted that, the fairness parameter update formula may be changed correspondingly according to different utility functions; however, all the update formulas include an edge-to-average ratio and an preset critical value of the edge-to-average ratio, which is not limited in the embodiment of the present invention.

102: Obtain, according to average user throughputs of users at the previous moment, the fairness parameter at the current moment, and channel conditions of the users at the current moment, an allocation scheme that maximizes system utility.

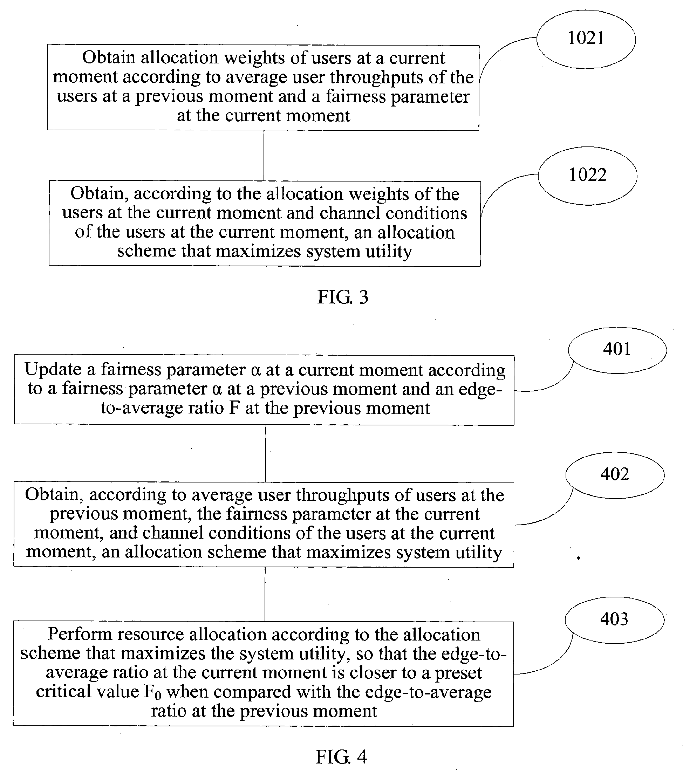

Specifically, as shown in FIG. 3, the foregoing step 102 specifically includes:

1021: Obtain allocation weights of the users at the current moment according to the average user throughputs of the users at the previous moment and the fairness parameter at the current moment.

As described in the foregoing example, an $\alpha$-fair utility function is used to control the system utility and fairness, and the preset critical value of the edge-to-average ratio is $F_0$. Except for the first moment, the allocation weights of the users at the current moment are obtained by using the $\alpha$-fair utility function according to the average user throughputs of the users at the previous moment and the fairness parameter at the current moment.

It should be noted that, the average user throughputs of the users at the first moment are 0.

1022: Obtain, according to the allocation weights of the users at the current moment and the channel conditions of the users at the current moment, the allocation scheme that maximizes the system utility.

The allocation scheme that maximizes the system utility is obtained by calculating according to the allocation weights of the users obtained in step 1021 and the channel conditions of the users at the current moment.

103: Perform resource allocation according to the allocation scheme that maximizes the system utility, so that the edge-to-average ratio at the current moment is closer to the preset critical value when compared with the edge-to-average ratio at the previous moment.

Specifically, the allocation scheme at the current moment is obtained by calculating according to step 102, and system resource allocation is performed for the users at the current moment; after the resource allocation, the average cell edge throughput and the average system throughput at the current moment are changed, so that the edge-to-average ratio becomes larger or smaller, and gets closer to the preset critical value than the edge-to-average ratio at the previous moment.

It should be noted that, according to the foregoing theoretical analysis, when the edge-to-average ratio is equal to the preset critical value, the foregoing resource allocation scheme makes the edge-to-average ratio stabilized at the preset critical value. In an actual application, the edge-to-average ratio may only be approximately equal to the preset critical value, and in a certain accuracy range, the edge-to-average ratio may be the preset critical value and stable.

The embodiment of the present invention provides a resource allocation method. A fairness parameter at a current moment is updated according to a fairness parameter and an edge-to-average ratio that are at a previous moment, and a preset critical value, an allocation scheme that maximizes system utility is obtained by calculating according to the fairness parameter at the current moment, average throughputs of users at the previous moment, and channel conditions of the users, and resource allocation is performed according to the allocation scheme. The resource allocation method which uses the edge-to-average ratio can use the edge-to-average ratio to update the fairness parameter, and reflect a qualitative relationship between key technical indexes, being the cell edge throughput and the average system throughput, in a resource allocation process, thereby achieving an effective improvement of fairness among users and further implementing proper allocation of resources to users.

An example that the preset critical value of the edge-to-average ratio is $F_0$, and an $\alpha$-fair utility function is used to control the system utility and fairness is used for specific description in the following, and in this case, as shown in FIG. 4, the resource allocation method includes:

401: Update a fairness parameter $\alpha$ at a current moment according to a fairness parameter $\alpha$ at a previous moment, an edge-to-average ratio F at the previous moment, and a preset critical value $F_0$.

Specifically, the fairness parameter $\alpha$ is updated according to a fairness parameter update formula; preferably, the fairness parameter update formula is $\alpha[t]=\max[0,\alpha[t-1]+c_\alpha\cdot(F_0-F[t-1])]$. t indicates any moment, $\alpha[t]$ indicates a fairness parameter at a t moment, $F[t-1]$ is an edge-to-average ratio at a t-1 moment, and $F[t-1]=Rai\%[t-1]/Rb_{j\%}[t-1]$; preferably, all users in a system are involved in calculating an average system throughput, that is,

$$F[t-1]=\overline{Ra}_{i\%}[t-1]/(\sum_{k=1}^{K}\overline{R}_k[t-1]/K)$$, where $\overline{Ra}_{i\%}[t-1]$ indicates an average cell edge throughput at the t-1 moment, i% (0<i<100) indicates a ratio of the number of users being edge users involved in calculating the average cell edge throughput to the total number of users in the system; in $\overline{Ra}_{i\%}[t-1]=\overline{Ra}_{i\%}[t-2]-c_{i\%}\cdot(f_{belowi\%}[t-2]-i\%)$, $f_{belowi\%}[t-2]$ is a ratio of the number of users being users satisfying $\overline{R}_k[t-2]\leq\overline{Ra}_{i\%}[t-2]$ in the system to the total number of users in the system, $c_{i\%}$ and $c_\alpha$ are algorithm parameters and have positive values, $\overline{R}_k[t-2]$, $k=1,......,K$ is an obtained average user throughput of a $k^{th}$ user in the system at a t-2 moment, $k=1, 2, ...,$ and K, indicating a first, a second, ..., and a $K^{th}$ user in the system, K indicates the total number of users in the system, $\overline{Rb}_{j\%}[t-1]$ indicates an average system throughput at the t-1 moment, j% ($0<j\leq100$) indicates a ratio of the number of users being users involved in calculating the average system throughput to the total number of users in the system; and in $\overline{Rb}_{j\%}[t-1]=\sum_{n=l}^{h}\overline{R}_n[t-1]\Big/{h-l+1}$,

$\sum_{n=l}^{h}\overline{R}_n[t-1]$ indicates a sum of average user throughputs of the users involved in calculating the average system throughput, the h-l+1 indicates the number of users being the users involved in calculating the average system throughput, $\overline{R}_n[t-1],n=l,l+1,......,h$ is an obtained average user throughput of an $n^{th}$ user in the system at the t-1 moment, n=l, l+1, ..., and h, indicating that users in the system and involved in calculating the average system throughput are an $l^{th}$ user, an $(l+1)^{th}$ user, ..., and an $h^{th}$ user, where $l\geq1$ and $h\leq K$.

If the edge-to-average ratio F at the t-1 moment is less than $F_0$, it can be known from the fairness parameter update formula $\alpha[t]=\max[0,\alpha[t-1]+c_\alpha\cdot(F_0-F[t-1])]$ that, the fairness parameter $\alpha$ at the t moment may become larger when compared with the fairness parameter $\alpha$ at the t-1 moment.

If the edge-to-average ratio F at the t-1 moment is greater than $F_0$, it can be known from the fairness parameter update formula $\alpha[t]=\max[0,\alpha[t-1]+c_\alpha\cdot(F_0-F[t-1])]$ that, the fairness parameter $\alpha$ at the t moment may become smaller when compared with the fairness parameter $\alpha$ at the t-1 moment or a value of the fairness parameter $\alpha$ at the t moment is 0.

Preferably, the average user throughputs of users at one moment are obtained in an alpha filtering manner, and a specific formula is:

$$\overline{R}_k[t-1] = \left(1-\beta\right)\cdot\overline{R}_k[t-2] + \beta\cdot R_k[t-1],$$

where, $\overline{R}_k[t\text{-}1]$, $k$=1, ... , $K$ is an average user throughput of a $k^{th}$ user in the system at the t-1 moment, $R_k[t\text{-}1]$ is an instantaneous user throughput of the $k^{th}$ user at the t-1 moment, the instantaneous user throughput of the $k^{th}$ user at the t-1 moment is a product of a user channel condition of the $k^{th}$ user at the t-1 moment and the number of resource blocks allocated to the $k^{th}$ user at the t-1 moment, $k$ =1, 2, ..., and K, indicating a first, a second, ..., and a $K^{th}$ user in the system, K indicates the total number of users in the system, and $\beta$ is a filter factor within a range of (0, 1).

402: Obtain, according to the average user throughputs $\overline{R}_k[t\text{-}1]$ of the users at the previous moment, the fairness parameter $\alpha[t]$ at the current moment, and channel conditions of the users at the current moment, an allocation scheme that maximizes system utility.

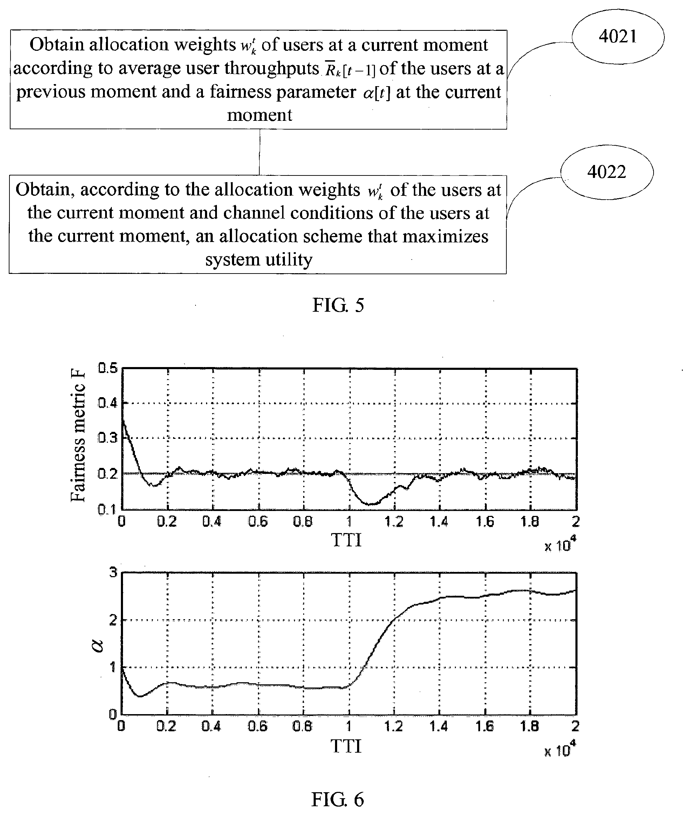

Specifically, as shown in FIG. 5, the foregoing step 402 specifically includes:

4021: Obtain allocation weights $w_k^t$ of the users at the current moment according to the average user through-puts $\overline{R}_k[t\text{-}1]$ of the users at the previous moment and the fairness parameter $\alpha[t]$ at the current moment.

The allocation weights $w_k^t$ of the users at the t moment are obtained according to a weight calculation formula; specifically, the weight calculation formula is: $w_k^{\,t} = U_\alpha'(\overline{R_k}[t-1])$, where, t indicates any moment, $w_k^{\,t}$ indicates an allocation weight of a $k^{th}$ user at the t moment, $k$ =1, 2, ..., and K, indicating a first, a second, ..., and a $K^{th}$ user in the system, K indicates the total number of users in the system, and $U_\alpha'(\overline{R_k}[t-1])$ is a derivative of a fair utility function

$$U_\alpha(\overline{R_k}[t-1]); \text{ in } U_\alpha(\overline{R_k}[t-1]) = \begin{cases} \dfrac{1}{1-\alpha}\displaystyle\sum_{k=1}^{K}\overline{R}_k^{1-\alpha}[t-1] & \alpha \geq 0, \alpha \neq 1 \\[2ex] \displaystyle\sum_{k=1}^{K}\log\overline{R}_k[t-1] & \alpha = 1 \end{cases}, \alpha \text{ indicates a fairness parameter,}$$

and $\overline{R}_k[t\text{-}1]$ indicates the obtained average user throughput of the $k^{th}$ user at the t-1 moment.

4022: Obtain, according to the allocation weights $w_k^t$ of the users at the current moment and the channel conditions of the users at the current moment, the allocation scheme that maximizes the system utility.

Specifically, the allocation scheme for resource allocation that maximizes the system utility at the t moment is obtained by calculating according to the allocation weights $w_k^t$ of the users obtained in step 4021 and a calculation formula for resource allocation that maximizes the system utility. Further, the calculation formula for resource allocation that maximizes the system utility is:

$$\max_{M^t \in Z^{K+}} \sum_{k=1}^{K} w_k^t \cdot M_k^t \cdot FE(SINR_k^t)$$
$$s.t. \quad \sum_{k=1}^{K} M_k^t \leq M_{max}$$
,

where $\displaystyle\max_{M^t \in Z^{K+}} \sum_{k=1}^{K} w_k^t \cdot M_k^t \cdot FE(SINR_k^t)$ is a target function, t indicates any moment, $w_k^{\,t}$ indicates an allocation weight of the $k^{th}$ user at the t moment, s.t. indicates a constraint condition, SINR indicates a signal to interference plus noise ratio, $SINR_k^t$ indicates a signal to interference plus noise ratio of the $k^{th}$ usher at the t moment, $FE(SINR_k^t)$ indicates an equivalent spectral efficiency function, which is mapped by SINR, of the $k^{th}$ user at the t moment, that is, a channel condition of the $k^{th}$ user, $M_k^t$ indicates the number of resource blocks allocated to the $k^{th}$ user at the t moment, and $M_{max}$ indicates the total number of resource blocks of the system.

If the edge-to-average ratio F at the t-1 moment is less than $F_0$, it indicates that the average cell edge throughput is excessively small, a user throughput of a cell edge user is excessively small, that is, system resources need to be reallocated, so that the user throughput of the cell edge user is improved, and therefore the average cell edge throughput is improved, so that the edge-to-average ratio at the t moment is larger when compared with the edge-to-average ratio at the t-1 moment and gets closer to the preset critical value $F_0$. Therefore, under the premise that maximization of system utility is ensured, more resources need to be allocated to the cell edge user, and therefore, it is required that resources allocated to the cell edge user at the t moment are more than those at the t-1 moment. It can be known from a weight allocation formula $w_k^{\,t} = U_\alpha'(\overline{R_k}[t-1])$ and $U_\alpha(\overline{R_k}[t-1]) = \begin{cases} \dfrac{1}{1-\alpha}\sum\limits_{k=1}^{K}\overline{R}_k^{1-\alpha}[t-1] & \alpha \geq 0, \alpha \neq 1 \\ \sum\limits_{k=1}^{K}\log \overline{R}_k[t-1] & \alpha = 1 \end{cases}$

that, an allocation weight w at the t moment decreases when the fairness parameter $\alpha$ at the t moment increases, but at the t moment, the allocation weights of users at a cell edge are greater than allocation weights of center users of a cell, and compared with the center users of the cell, the edge users of the cell have increased allocation weights. It can be known according to a calculation formula $\max\limits_{M^t \in Z^{K+}} \sum\limits_{k=1}^{K} w_k^t \cdot M_k^t \cdot FE(SINR_k^t)$ for resource allocation that maximizes

$$s.t. \quad \sum_{k=1}^{K} M_k^t \leq M_{max}$$

the system utility that, the calculated system resource allocation scheme at the t moment is the number of resource blocks which should be allocated to the users. In this case, compared with the center users of the cell, the edge users of the cell have the increased allocation weights, so that the calculated number of resource blocks allocated to the cell edge user at the t moment is greater than the number of resource blocks allocated at the t-1 moment, the average cell edge throughput is improved, and the edge-to-average ratio of the cell is correspondingly improved; therefore, compared with the edge-to-average ratio at the t-1 moment, the edge-to-average ratio at the t moment is closer to $F_0$.

It should be noted that, to ensure the fairness among users in the system, the allocation weight of the cell edge user is greater than the allocation weight of the cell center user. For example, at a certain moment, an allocation weight of a certain edge user of the cell is $1/9^{0.6}$, and an allocation weight of a certain center user of the cell is $1/25^{0.6}$; in this case, the fairness parameter is 0.6; at a next moment, the fairness parameter of the cell increases to 1.5, the allocation weight of the certain edge user of the cell becomes $1/9^{1.5}$, and the allocation weight of the certain center user of the cell becomes $1/25^{1.5}$; the allocation weight of the certain edge user of the cell decreases; however, correspondingly, the allocation weight of the certain center user of the cell also decreases, and a decreasing speed of the allocation weight of the certain center user of the cell is much faster than a decreasing speed of the allocation weight of the certain edge user of the cell; therefore, relatively, the allocation weight of the certain edge user of the cell is improved.

If the edge-to-average ratio F at the t-1 moment is greater than $F_0$, it indicates that the system does not achieve an optimal effect, and the edge-to-average ratio needs to be lowered to make the edge-to-average ratio at the t moment become smaller than the edge-to-average ratio at the t-1 moment and closer to the preset critical value $F_0$. That is, the average system throughput is excessively small, and system resources need to be reallocated, to increase the average system throughput. The average system throughput depends on average throughputs of the cell center users; to increase the average system throughput, the average throughputs of the cell center users need to be increased, and more resources need to be allocated to the cell center users under the premise that fairness among users in the system is ensured; therefore, it is required that resources allocated to the center users at the t moment are more than those at the t-1 moment. If the fairness parameter $\alpha$ at the t moment decreases when compared with the fairness parameter $\alpha$ at

the t-1 moment, and it can be known according to a weight allocation formula $w_k^{\,t} = U_\alpha'(\overline{R_k}[t-1])$ and

$U_\alpha(\overline{R_k}[t-1]) = \begin{cases} \dfrac{1}{1-\alpha}\sum\limits_{k=1}^{K}\overline{R}_k^{1-\alpha}[t-1] & \alpha \geq 0, \alpha \neq 1 \\ \sum\limits_{k=1}^{K}\log \overline{R}_k[t-1] & \alpha = 1 \end{cases}$ that, an allocation weight w at the t moment increases when the fairness parameter $\alpha$ at the t moment decreases; although the allocation weights of the center users of the cell are less than the allocation weights of the edge users of the cell, the cell center users have the increased allocation weights at the t moment when compared to the edge users of the cell. It can be known according to a calculation formula

$$\max_{M^t \in Z^{K+}} \sum_{k=1}^{K} w_k^t \cdot M_k^t \cdot FE(SINR_k^t)$$

for resource allocation that maximizes the system utility that, the calculated system

$$s.t. \quad \sum_{k=1}^{K} M_k^t \leq M_{\max}$$

resource allocation scheme at the t moment is the numbers of resource blocks which should be allocated to the users. In this case, compared with the edge users of the cell, the center users of the cell have the increased allocation weights, so that the calculated number of resource blocks allocated to the center user of the cell at the t moment is greater than the number of resource blocks allocated at the t-1 moment, the average system throughput increases, and the edge-to-average ratio of the cell correspondingly decreases; therefore, compared with the edge-to-average ratio at the t-1 moment, the edge-to-average ratio at the t moment is closer to $F_0$.

It should be noted that, to ensure the fairness among users in the system, the allocation weight of the cell edge user is greater than the allocation weight of the cell center user. For example, at a certain moment, an allocation weight of a certain edge user of the cell is $1/9^2$, and an allocation weight of a certain center user of the cell is $1/25^2$ ; in this case, the fairness parameter is 2; at a next moment, the fairness parameter of the cell decreases to 0.5, and in this case, the allocation weight of the certain edge user of the cell becomes $1/9^{0.5}$, and the allocation weight of the certain center user of the cell becomes $1/25^{0.5}$. The allocation weight of the certain edge user of the cell increases; however, correspondingly, the allocation weight of the certain center user of the cell also increases, and an increasing speed of the allocation weight of the certain center user of the cell is much faster than an increasing speed of the allocation weight of the edge user of the cell; therefore, relatively speaking, the allocation weight of the certain center user of the cell increases.

If the edge-to-average ratio F at the t-1 moment is greater than $F_0$, the fairness parameter $\alpha$ at the t moment is 0, and it can be known according to the weight allocation formula $w_k^t = U_\alpha'(\overline{R}_k[t-1])$ and

$$U_\alpha(\overline{R}_k[t-1]) = \begin{cases} \dfrac{1}{1-\alpha} \sum_{k=1}^{K} \overline{R}_k^{1-\alpha}[t-1] & \alpha \geq 0, \alpha \neq 1 \\ \sum_{k=1}^{K} \log \overline{R}_k[t-1] & \alpha = 1 \end{cases}$$

that, the allocation weight w at the t moment is 1, it can be known from a calculation formula $$\max_{M^t \in Z^{K+}} \sum_{k=1}^{K} w_k^t \cdot M_k^t \cdot FE(SINR_k^t)$$ for resource allocation that maximizes the

$$s.t. \quad \sum_{k=1}^{K} M_k^t \leq M_{\max}$$

system utility that, the number of resource blocks allocated to each user is mainly related to the user channel condition of the user. Because the channel conditions of the center users of the cell are better than the channel conditions of the edge users of the cell, most of resources in the system are allocated to the cell center users, the average system throughput at the t moment increases, and the edge-to-average ratio decreases, that is, the edge-to-average ratio at the t moment is closer to $F_0$ when compared with the edge-to-average ratio at the t-1 moment.

403: Perform resource allocation according to the allocation scheme that maximizes the system utility, so that the edge-to-average ratio at the current moment is closer to the preset critical value $F_0$ when compared with the edge-to-average ratio at the previous moment.

Specifically, the number of resource blocks that should be allocated to each user to maximize the system utility may be calculated according to the formulas in step 402, and system resources are allocated to the users according to the calculated allocation scheme; after resources are allocated, the average cell edge throughput and the average system throughput at the current moment are changed, so that the edge-to-average ratio becomes larger or smaller, and gets closer to the preset critical value than the edge-to-average ratio of the previous moment.

The embodiment of the present invention provides a resource allocation method. A fairness parameter at a current moment is updated according to a fairness parameter and an edge-to-average ratio that are at a previous moment, and a preset critical value, an allocation scheme that maximizes system utility is obtained by calculating according to the fairness parameter at the current moment, average throughputs of users at the previous moment, and channel conditions of the users, and resource allocation is performed according to the allocation scheme. The resource allocation method which uses the edge-to-average ratio can use the edge-to-average ratio to update the fairness parameter, and reflect a qualitative relationship between key technical indexes, being the cell edge throughput and the average system throughput, in a resource allocation process, thereby achieving an effective improvement of fairness among users and further implementing proper allocation of resources to users.

An example that a simulation time in an LTE uplink system is 20000 TTIs is used for description in the following in an exemplary manner.

Assume that in the LTE uplink system, K=8, that is, there are 8 users in total, $M_{max}$ = 48, that is, the total number of resource blocks in the system is 48, $F_0$ =0.2, i%=5%, that is, a ratio of the number of users being edge users involved in calculating the average cell edge throughput to the total number of users in the system is 5%, $c_{5\%}$=10, and $c_\alpha$=0.01. In addition, when TTI=10001, a user channel condition is changed, as shown in FIG. 6. It can be seen from FIG. 6 that the edge-to-average ratio F and the fairness parameter $\alpha$ vary with the TTI. When TTI=0, the edge-to-average ratio F=0.35, and the fairness parameter $\alpha$=1. To make the edge-to-average ratio F gradually approach 0.2, that is, approach $F_0$, and to maximize a system throughput, the fairness parameter $\alpha$ is adaptively stabilized at about 0.6 gradually with the increase of TTI. After the user channel condition is changed, that is, when TTI=10001, the edge-to-average ratio F decreases; to make the edge-to-average ratio F increase, and approach $F_0$ again, and to maximize the system throughput, the fairness parameter is adaptively adjusted to about 2.5, so that the edge-to-average ratio F is rapidly stabilized at 0.2 again.

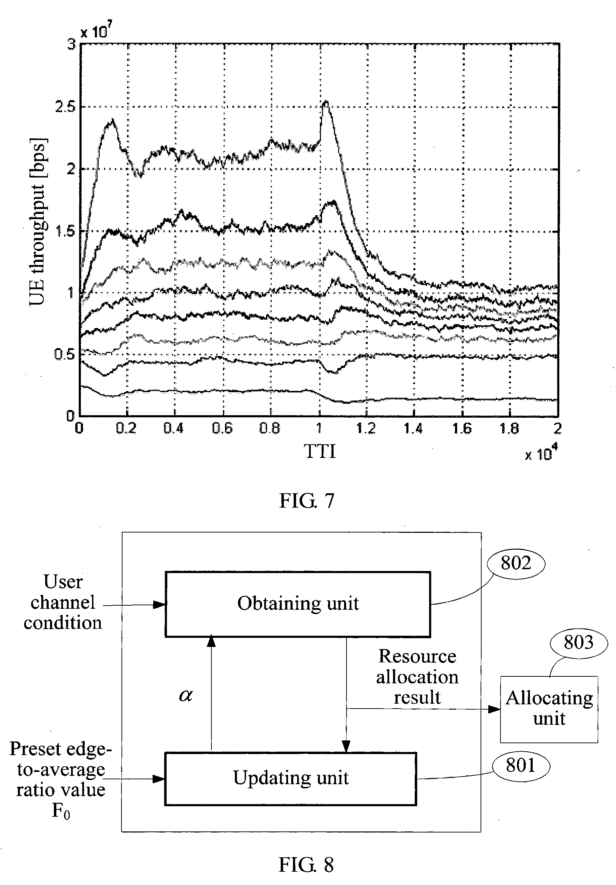

A process in which throughputs of users vary with the TTI is shown in FIG. 7. After the user channel condition is changed, that is, after TTI=10001, because the edge-to-average ratio F decreases, the fairness parameter $\alpha$ needs to be increased, so that the allocation weights of users decrease; however, compared to the center users of the cell, the edge users of the cell have the increased allocation weights; therefore, it can be seen from FIG. 7 that the throughputs of the center users decrease.

Corresponding to the foregoing method, a resource allocation apparatus is provided, and as shown in FIG. 8, includes an updating unit 801, an obtaining unit 802, and an allocating unit 803.

The updating unit 801 is configured to update a fairness parameter at a current moment according to a fairness parameter at a previous moment, an edge-to-average ratio at the previous moment, and a preset critical value, where the edge-to-average ratio is a ratio of an average cell edge throughput to an average system throughput, and the fairness parameter is not less than 0.

Specifically, the updating unit 801 updates the fairness parameter at the current moment according to a fairness parameter update formula; preferably, the fairness parameter update formula is: $\alpha[t]=\max[0,\alpha[t-1]+c_\alpha\cdot(F_0-F[t-1])]$, where t indicates any moment, $\alpha[t]$ indicates a fairness parameter at the t moment, $F[t-1]$ is an edge-to-average ratio at a t-1 moment, and $F[t-1] =\overline{Ra}_{i\%}[t-1]/\overline{Rb}_{j\%}[t-1]$; preferably, all users in a system are involved in calculating the average system throughput, that is, $F[t-1] = \overline{Ra}_{i\%}[t-1]/(\sum_{k=1}^{K}\overline{R}_k[t-1]/K)$, $F_0$ is a preset critical value, $\overline{Ra}_{i\%}[t-1]$ indicates an average cell edge throughput at the t-1 moment, i% (0<i<100) indicates a ratio of the number of users being edge users involved in calculating an average cell edge throughput to the total number of users in the system; in $Ra_{i\%}[t-1] = Ra_{i\%}[t-2]- c_{i\%}\cdot(f_{belowi\%}[t-2]-i\%)$, $f_{belowi\%}[t-2]$ is a ratio of the number of users being users satisfying $\overline{R}_k[t-2]\leq Ra_{i\%}[t-2]$ in the system to the total number of users in the system, $c_{i\%}$ and $c_\alpha$ are algorithm parameters and have positive values, $\overline{R}_k[t-2],k=1,......,$ K is an obtained average user throughput of a $k^{th}$ user in the system at a t-2 moment, k=1, 2, ..., and K, indicating a first, a second, ..., and a $K^{th}$ user in the system, K indicates the total number of users in the system, $\overline{Rb}_{j\%}[t-1]$ indicates an average system throughput at the t-1 moment, j% (0<j≤100) indicates a ratio of the number of users being users involved in calculating the average system throughput to the total number of users in the system; and in

$$\overline{Rb}_{j\%}[t-1]=\sum_{n=l}^{h}\overline{R}_n[t-1]\Bigg/{h-l+1}, \quad \sum_{n=l}^{h}\overline{R}_n[t-1] \text{ indicates a sum of average user throughputs of the users}$$

involved in calculating the average system throughput, h-l+1 indicates the number of users being the users involved in calculating the average system throughput, $\overline{R}_n[t-1],n=l,l+1,......,$ h is an obtained average user throughput of an $n^{th}$ user in the system at the t-1 moment, n=l, l+1, ..., and h, indicating that users in the system and involved in calculating the average system throughput are an 1th user, an $(l+1)^{th}$ user, ..., and an $h^{th}$ user, where $l \geq 1$ and $h \leq K$.

Preferably, the average user throughputs of users at a moment are obtained in an alpha filtering manner, and a specific formula is: $\overline{R}_k[t-1]=(1-\beta)\cdot\overline{R}_k[t-2]+\beta\cdot R_k[t-1]$, where $R_k[t-1]$ is an instantaneous throughput of a $k^{th}$ user at the t-1 moment, the instantaneous user throughput of the $k^{th}$ user at the t-1 moment is a product of a user channel condition of the $k^{th}$ user at the t-1 moment and the number of resource blocks allocated to the $k^{th}$ user at the t-1 moment, k=1, 2, ..., and K, indicating a first, a second, ..., and a $K^{th}$ user in the system, K indicates the total number of users in the system, and $\beta$ is a filter factor within a range of (0, 1).

The edge-to-average ratio is the ratio of the average cell edge throughput to the average system throughput.

The average cell edge throughput at a certain moment is an average value of average user throughputs of all or a part of edge users in the system at the moment; and the average system throughput at a certain moment is an average value of average user throughputs of all or a part of users in the system at the moment.

The obtaining unit 802 is configured to obtain, according to average user throughputs of users at the previous moment, the fairness parameter at the current moment, and channel conditions of users at the current moment, an allocation scheme that maximizes system utility.

Specifically, firstly, the obtaining unit 802 obtains allocation weights of users at the current moment according to the average user throughputs of the users at the previous moment and the fairness parameter at the current moment. A weight obtaining module specifically obtains the allocation weights of users at the current moment according to a weight formula. Preferably, the weight calculation formula is: $w_k^{~t} = U_\alpha' (\overline{R_k}[t-1])$, where, t indicates any moment,

$w_k^{~t}$ indicates an allocation weight of the k$^{th}$ user at the t moment, $k$=1, 2, ..., and K, indicating a first, a second, ..., and a K$^{th}$ user in the system, K indicates the total number of users in the system, and $U_\alpha' (\overline{R_k}[t-1])$ is a derivative of a system fair utility function $U_\alpha(\overline{R_k}[t\text{-}1])$ ; $U_\alpha (\overline{R_k}[t-1]) = \begin{cases} \dfrac{1}{1-\alpha} \sum_{k=1}^{K} \overline{R}_k^{1-\alpha}[t-1] & \alpha \geq 0, \alpha \neq 1 \\ \sum_{k=1}^{K} \log \overline{R}_k[t-1] & \alpha = 1 \end{cases}$ , wherein α indi-

cates the fairness parameter, and $\overline{R}_k[t\text{-}1]$ indicates the obtained average user throughput of the k$^{th}$ user at the t-1 moment.

Then, the obtaining unit 802 obtains, according to the allocation weights of the users at the current moment and the channel conditions of the users at the current moment, the allocation scheme that maximizes the system utility.

Specifically, the obtaining unit 802 specifically obtains maximized system utility at the current moment according to the calculation formula of resource allocation that maximizes the system utility. The calculation formula for resource allocation that maximizes the system utility is: $\displaystyle \max_{M^t \in Z^{K+}} \sum_{k=1}^{K} w_k^t \cdot M_k^{~t} \cdot FE(SINR_k^t)$ , specifically,

$s.t. \quad \displaystyle \sum_{k=1}^{K} M_k^{~t} \leq M_{\max}$

$\displaystyle \max_{M^t \in Z^{K+}} \sum_{k=1}^{K} w_k^t \cdot M_k^{~t} \cdot FE(SINR_k^t)$ is a target t function, a t moment indicates any moment, $w_k^{~t}$ indicates an allocation weight of the k$^{th}$ user at the t moment, s.t. indicates a constraint condition, SINR indicates a signal to interference plus noise ratio, $SINR_k^t$ indicates a signal to interference plus noise ratio of the k$^{th}$ user at the t moment, $FE(SINR_k^t)$ indicates an equivalent spectral efficiency function, which is mapped by the SINR, of the k$^{th}$ user at the t moment, that is, indicates a channel condition of the k$^{th}$ user, $M_k^{~t}$ indicates the number of resource blocks allocated to the k$^{th}$ user at the t moment, and $M_{\max}$ indicates the total number of resource blocks of the system.

The allocating unit 803 is configured to perform resource allocation according to the allocation scheme that maximizes the system utility, so that the edge-to-average ratio at the current moment is closer to the preset critical value when compared with the edge-to-average ratio at the previous moment.

The resource allocation apparatus according to the embodiment of the present invention may execute actions in the foregoing method embodiments, for example, the updating unit updates a fairness parameter at a current moment according to a fairness parameter and an edge-to-average ratio that are at a previous moment, and the obtaining unit obtains, according to the fairness parameter at the current moment, average throughputs of users at the previous moment, and channel conditions of the users, an allocation scheme that maximizes the system utility, and the allocating unit performs resource allocation according to the allocation scheme obtained by the obtaining unit. The resource allocation apparatus which uses the edge-to-average ratio can use the edge-to-average ratio to update the fairness parameter, and reflect a qualitative relationship between key technical indexes, being the cell edge throughput and the average system throughput, in a resource allocation process, thereby achieving an effective improvement of fairness among users and further implementing proper allocation of resources to users.

An embodiment of the present invention further provides a processor, configured to update a fairness parameter at a current moment according to a fairness parameter at a previous moment, an edge-to-average ratio at the previous moment, and a preset critical value, where the edge-to-average ratio is a ratio of an average cell edge throughput to an average system throughput, and the fairness parameter is not less than zero; obtain, according to average user throughputs of users at the previous moment, the fairness parameter at the current moment, and channel conditions of the users at the current moment, an allocation scheme that maximizes system utility; and perform resource allocation according to the allocation scheme that maximizes the system utility, so that the edge-to-average ratio at the current moment is closer to the preset critical value when compared with the edge-to-average ratio at the previous moment. The processor may be connected to a memory, and the memory is configured to store information processed by the processor. For actions performed by the processor, reference may be made to content in the resource allocation method provided in the foregoing embodiment, which is not repeatedly described herein. The processor may exist in a base station, and be configured to allocate a resource.

An embodiment of the present invention further provides a chip, the chip is configured to allocate a resource, and the chip may include the foregoing processor.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. Furthermore, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to an actual need to achieve the objectives of the solutions of the embodiments.

In addition, functional units in the embodiments of the present invention may be integrated into one processing unit, or each of the units may exist alone physically, or two or more units are integrated into one unit. The integrated unit may be implemented through hardware, or may also be implemented in a form of hardware plus a software functional unit.

The integrated unit implemented in the form of software functional unit may be stored in a computer readable storage medium. The software functional unit is stored in a storage medium and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

A person of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1.    A resource allocation method, comprising:

updating (101) a fairness parameter at a current moment according to a fairness parameter at a previous moment, an edge-to-average ratio at the previous moment, and a preset critical value, wherein the edge-to-average ratio is a ratio of an average cell edge throughput to an average system throughput, and the fairness parameter is not less than zero;
obtaining (102), according to average user throughputs of users at the previous moment, the fairness parameter at the current moment, and channel conditions of the users at the current moment, an allocation scheme that maximizes system utility; and
performing (103) resource allocation according to the allocation scheme that maximizes the system utility, so that the edge-to-average ratio at the current moment is closer to the preset critical value when compared with the edge-to-average ratio at the previous moment.

2. The method according to claim 1, wherein the updating (101) a fairness parameter at a current moment according to a fairness parameter at a previous moment, an edge-to-average ratio at the previous moment, and a preset critical value comprises:

updating the fairness parameter at the current moment according to a fairness parameter update formula, wherein the fairness parameter update formula is:

$$\alpha[t] = \max\left[0, \alpha[t-1] + c_\alpha \cdot (F_0 - F[t-1])\right],$$

wherein
t indicates any moment, $\alpha[t]$ indicates a fairness parameter at a t moment, $\alpha[t-1]$ indicates a fairness parameter at a t-1 moment, $F[t-1]$ is an edge-to-average ratio at a t-1 moment, $F_0$ is a preset critical value, and $c_\alpha$ is an algorithm parameter and has a positive value.

3. The method according to claim 2, wherein a calculation formula of the edge-to-average ratio $F[t-1]$ at the t-1 moment is: $F[t-1] = \overline{Ra}_{i\%}[t-1]/\overline{Rb}_{j\%}[t-1]$, wherein
$\overline{Ra}_{i\%}[t-1]$ indicates an average cell edge throughput at the t-1 moment, i% (0<i<100) indicates a ratio of the number of edge users involved in calculating the average cell edge throughput to the total number of users in a system, $\overline{Rb}_{i\%}[t-1]$ indicates an average system throughput at the t-1 moment, and j% ($0 < j \le 100$) indicates a ratio of the number of users being users involved in calculating the average system throughput to the total number of users in the system.

4. The method according to claim 3, wherein a calculation formula of the average cell edge throughput $Ra_{i\%}[t-1]$ at the t-1 moment is $\overline{Ra}_{i\%}[t-1] = \overline{Ra}_{i\%}[t-2] - c_{i\%} \cdot (f_{belowi\%}[t-2] - _{i\%})$; and

a calculation formula of the average system throughput $\overline{Rb}_{j\%}[t-1]$ at the t-1 moment is

$$\overline{Rb}_{j\%}[t-1] = \left.\sum_{n=l}^{h} \overline{R}_n[t-1]\right/ h-l+1 \quad\text{, wherein}$$

$f_{belowi\%}[t-2]$ is a ratio of the number of users being users satisfying $\overline{R}_k[t-2] \le \overline{Ra}_{i\%}[t-2]$ in the system to the total number of users in the system, $c_{i\%}$ is an algorithm parameter and has a positive value, $\overline{R}_k[t-2]$, k =1,......, K is an obtained average user throughput of a k th user in the system at a t-2 moment, k=1, 2, ..., and K, indicating a first, a second, ..., and a Kth user in the system, and K indicates the total number of users in the system; and

$$\overline{Rb}_{j\%}[t-1] = \left.\sum_{n=l}^{h} \overline{R}_n[t-1]\right/ h-l+1, \quad\text{wherein } \sum_{n=l}^{h} \overline{R}_n[t-1] \text{ indicates a sum of average user throughputs}$$

of users involved in calculating the average system throughput, h-l+1 indicates the number of users involved in calculating the average system throughput, $\overline{R}_n[t-1], n=l, l+1, ......, h$ is an obtained average user throughput of an nth user in the system at the t-1 moment, n=l, l+1, ..., and h, indicating that users in the system and involved in calculating the average system throughput are a first user, an (l+1)th user, ..., and an hth user, wherein $l \ge 1$ and $h \le K$.

5. The method according to any one of claims 1 to 4, wherein the obtaining (102), according to average user throughputs of users at the previous moment, the fairness parameter at the current moment, and channel conditions of the users at the current moment, an allocation scheme that maximizes system utility comprises:

obtaining (1021) allocation weights of the users at the current moment according to the average user throughputs of the users at the previous moment and the fairness parameter at the current moment; and
obtaining (1022), according to the allocation weights of the users at the current moment and the channel conditions of the users at the current moment, the allocation scheme that maximizes the system utility.

6. The method according to any one of claims 1 to 5, wherein an average cell edge throughput at a certain moment is an average value of the average user throughputs of all or a part of edge users in the system at the certain moment; and
an average system throughput at a certain moment is an average value of the average user throughputs of all or a part of users in the system at the certain moment.

7. The method according to claim 4, wherein the average user throughputs of the users at a moment are obtained in an alpha filtering manner, and a specific formula is:

$$\overline{R}_k[t-1] = (1-\beta)\cdot\overline{R}_k[t-2] + \beta\cdot R_k[t-1],$$

wherein, $R_k[t\text{-}1]$ is an instantaneous user throughput of the $k^{th}$ user at the t-1 moment, the instantaneous user throughput of the $k^{th}$ user at the t-1 moment is a product of a user channel condition of the $k^{th}$ user at the t-1 moment and the number of resource blocks allocated to the $k^{th}$ user at the t-1 moment, $k=1, 2, ...,$ and K, indicating a first, a second, ..., and a $K^{th}$ user in the system, K indicates the total number of users in the system, and $\beta$ is a filter factor within a range of (0, 1).

8. A resource allocation apparatus, comprising:

an updating unit (801), configured to update a fairness parameter at a current moment according to a fairness parameter at a previous moment, an edge-to-average ratio at the previous moment, and a preset critical value, wherein the edge-to-average ratio is a ratio of an average cell edge throughput to an average system throughput, and the fairness parameter is not less than zero;
an obtaining unit (802), configured to obtain, according to average user throughputs of users at the previous moment, the fairness parameter at the current moment, and channel conditions of the users at the current moment, an allocation scheme that maximizes system utility; and
an allocating unit 803), configured to perform resource allocation according to the allocation scheme that maximizes the system utility, so that the edge-to-average ratio at the current moment is closer to the preset critical value when compared with the edge-to-average ratio at the previous moment.

9. The apparatus according to claim 8 wherein:

the updating unit (801) is specifically configured to update the fairness parameter at the current moment according to a fairness parameter update formula,
wherein the fairness parameter update formula is: $\alpha[t] = \max[0,\alpha[t\text{-}1]+c_\alpha\cdot(F_0\text{-}F[t\text{-}1])]$, wherein t indicates any moment, $\alpha[t]$ indicates a fairness parameter at a t moment, $\alpha[t\text{-}1]$ indicates a fairness parameter at a t-1 moment, $F[t\text{-}1]$ is an edge-to-average ratio at a t-1 moment, $F_0$ is a preset critical value, and $c_\alpha$ is an algorithm parameter and has a positive value.

10. The apparatus according to claim 9, wherein a calculation formula of the edge-to-average ratio $F[t\text{-}1]$ at the t-1 moment is: $F[t\text{-}1]=\overline{Ra}_{i\%}[t\text{-}1]/\overline{Rb}_{j\%}[t\text{-}1]$, wherein
$\overline{Ra}_{i\%}[t\text{-}1]$ indicates an average cell edge throughput at the t-1 moment, i% (0<i<100) indicates a ratio of the number of users being edge users involved in calculating the average cell edge throughput to the total number of users in a system, $\overline{Rb}_{j\%}[t\text{-}1]$ indicates an average system throughput at the t-1 moment, and j% ($0 < j \leq 100$) indicates a ratio of the number of users being users involved in calculating the average system throughput to the total number of users in the system.

11. The apparatus according to claim 10, wherein a calculation formula of the average cell edge throughput $\overline{Ra}_{i\%}[t\text{-}1]$ at the t-1 moment is $\overline{Ra}_{i\%}[t\text{-}1] = \overline{Ra}_{i\%}[t\text{-}2]\text{-}c_{i\%}\cdot(f_{belowi\%}[t\text{-}2]\text{-}i\%)$; and

a calculation formula of the average system throughput $\overline{Rb}_{j\%}[t\text{-}1]$ at the t-1 moment is

$$\overline{Rb}_{j\%}[t-1] = \sum_{n=l}^{h}\overline{R}_n[t-1] \Big/ h-l+1,$$ wherein

$f_{below\%}[t\text{-}2]$ is a ratio of the number of users being users satisfying $\overline{R}_k[t\text{-}2] \leq \overline{Ra}_{i\%}[t\text{-}2]$ in the system to the total number of users in the system; $c_{i\%}$ is an algorithm parameter and has a positive value; $\overline{R}_k[t\text{-}2], k = 1, \ldots, K$ is an obtained average user throughput of a $k^{th}$ user in the system at a t-2 moment; k=1, 2, ..., and K, indicating a first, a second, ..., and a K$^{th}$ user in the system, and K indicates the total number of users in the system; and

$$\overline{Rb}_{j\%}[t-1] = \sum_{n=l}^{h} \overline{R}_n[t-1] \Big/ h - l + 1 \quad , \text{ wherein } \sum_{n=l}^{h} \overline{R}_n[t-1] \text{ indicates a sum of average user throughputs}$$

of users involved in calculating the average system throughput, h-1+1 indicates the number of users involved in calculating the average system throughput, $\overline{R}_n[t\text{-}1], n = l, l+1, \ldots, h$ is an obtained average user throughput of an n$^{th}$ user in the system at the t-1 moment, n=1, l+1, ..., and h, indicating that users in the system and involved in calculating the average system throughput are a first user, an (l+1)$^{th}$ user, ..., and an h$^{th}$ user, wherein $l \geq 1$ and $h \leq K$.

12. The apparatus according to any one of claims 8 to 11, wherein the obtaining unit (802) is specifically configured to:

    obtain allocation weights of the users at the current moment according to the average user throughputs of the users at the previous moment and the fairness parameter at the current moment; and obtain, according to the allocation weights of the users at the current moment and the channel conditions of the users at the current moment, the allocation scheme that maximizes the system utility.

13. The apparatus according to any one of claims 8 to 12, wherein an average cell edge throughput at a certain moment is an average value of the average user throughputs of all or a part of edge users in the system at the certain moment; and
    an average system throughput at a certain moment is an average value of the average user throughputs of all or a part of users in the system at the certain moment.

14. The apparatus according to claim 11, wherein in the updating unit (801), the average user throughputs of the users at a moment are obtained in an alpha filtering manner, and a specific formula is:

$$\overline{R}_k[t-1] = (1-\beta) \cdot \overline{R}_k[t-2] + \beta \cdot R_k[t-1],$$

    wherein, $R_k[t\text{-}1]$ is an instantaneous user throughput of the k$^{th}$ user at the t-1 moment, the instantaneous user throughput of the k$^{th}$ user at the t-1 moment is a product of a user channel condition of the k$^{th}$ user at the t-1 moment and the number of resource blocks allocated to the k$^{th}$ user at the t-1 moment, k=1, 2, ..., and K, indicating a first, a second, ..., and a K$^{th}$ user in the system, K indicates the total number of users in the system, and $\beta$ is a filter factor within a range of (0, 1).

15. The apparatus according to claim 12, wherein the obtaining, by the obtaining unit (802), allocation weights of users at the current moment is specifically obtaining the allocation weights of the users at the current moment according to a weight calculation formula;
    wherein the weight calculation formula is:

$$w_k{}' = U_\alpha'(\overline{R_k}[t-1]),$$

    wherein t indicates any moment, $w_k{}'$ indicates an allocation weight of a k$^{th}$ user at the t moment, k=1, 2, ..., and K, indicating a first, a second, ..., and a K$^{th}$ user in the system, K indicates the total number of users in the system, and $U'_\alpha(\overline{R}_k[t\text{-}1])$ is a derivative of a system fair utility function

$$U_\alpha(\overline{R_k}[t-1]) \; ; \; \text{and} \; U_\alpha(\overline{R_k}[t-1]) = \begin{cases} \dfrac{1}{1-\alpha} \sum_{k=1}^{K} \overline{R}_k^{1-\alpha}[t-1] & \alpha \geq 0, \alpha \neq 1 \\ \sum_{k=1}^{K} \log \overline{R}_k[t-1] & \alpha = 1 \end{cases} ,$$

wherein $\alpha$ indicates a fairness parameter, and $\overline{R}_k[t\text{-}1]$ indicates the obtained average user throughput of the $k^{th}$ user at the t-1 moment.

**Patentansprüche**

1. Ressourcenvergabeverfahren, umfassend:

   Aktualisieren (101) eines Fairnessparameters in einem aktuellen Moment gemäß einem Fairnessparameter in einem vorherigen Moment, einem Verhältnis von Rand zu Durchschnitt im vorherigen Moment und einem voreingestellten kritischen Wert,
   wobei das Verhältnis von Rand zu Durchschnitt ein Verhältnis eines durchschnittlichen Zellenranddurchsatzes zu einem durchschnittlichen Systemdurchsatz ist und der Fairnessparameter nicht kleiner als null ist;
   Erhalten (102) eines Vergabeschemas, das Systemnützlichkeit maximiert, gemäß durchschnittlichen Benutzerdurchsätzen von Benutzern im vorherigen Moment, dem Fairnessparameter im aktuellen Moment und Kanalbedingungen der Benutzer im aktuellen Moment; und
   Durchführen (103) von Ressourcenvergabe gemäß dem Vergabeschema, das die Systemnützlichkeit maximiert, so dass das Verhältnis von Rand zu Durchschnitt im aktuellen Moment verglichen mit dem Verhältnis vom Rand zu Durchschnitt im vorherigen Moment dem voreingestellten kritischen Wert näher ist.

2. Verfahren nach Anspruch 1, wobei das Aktualisieren (101) eines Fairnessparameters in einem aktuellen Moment gemäß einem Fairnessparameter in einem vorherigen Moment, einem Verhältnis von Rand zu Durchschnitt im vorherigen Moment und einem voreingestellten kritischen Wert Folgendes umfasst:

   Aktualisieren des Fairnessparameters im aktuellen Moment gemäß einer Fairnessparameter-Aktualisierungsformel, wobei die Fairnessparameter-Aktualisierungsformel $\alpha[t]=\max[0, \alpha[t\text{-}1]+c_\alpha\cdot(F_0\text{-}F[t\text{-}1])]$ ist, wobei t einen beliebigen Moment angibt, $\alpha[t]$ einen Fairnessparameter in einem t-Moment angibt, $\alpha[t\text{-}1]$ einen Fairnessparameter in einem (t-1)-Moment angibt, $F[t-1]$ ein Verhältnis von Rand zu Durchschnitt in einem (t-1)-Moment ist, $F_0$ ein voreingestellter kritischer Wert ist und $c_\alpha$ ein Algorithmusparameter ist und einen positiven Wert aufweist.

3. Verfahren nach Anspruch 2, wobei eine Berechnungsformel für das Verhältnis von Rand zu Durchschnitt $F[t\text{-}1]$ im (t-1)-Moment $F[t\text{-}1]= \overline{R}a_{i\%}[t\text{-}1]/\overline{R}b_{j\%}[t\text{-}1]$ ist, wobei $\overline{R}a_{i\%}[t\text{-}1]$ einen durchschnittlichen Zellenranddurchsatz im (t-1)-Moment angibt, i% (0<i<100) ein Verhältnis der Anzahl von bei der Berechnung des durchschnittlichen Zellenranddurchsatzes beteiligten Randbenutzern zu der Gesamtzahl von Benutzern in einem System angibt, $\overline{R}b_{j\%}[t\text{-}1]$ einen durchschnittlichen Systemdurchsatz im (t-1)-Moment angibt und j% (0<j≤100) ein Verhältnis der Anzahl von Benutzern, die Benutzer sind, die beim Berechnen des durchschnittlichen Systemdurchsatzes beteiligt sind, zu der Gesamtzahl von Benutzern im System angibt.

4. Verfahren nach Anspruch 3, wobei eine Berechnungsformel des durchschnittlichen Zellenranddurchsatzes $\overline{R}a_{i\%}[t\text{-}1]$ im (t-1)-Moment $\overline{R}a_{i\%}[t\text{-}1]=\overline{R}a_{j\%}[t\text{-}2]-c_{i\%}\cdot(f_{belowi\%}[t\text{-}2]\text{-}i\%)$ ist; und eine Berechnungsformel des durchschnittlichen Systemdurchsatzes $\overline{R}b_{j\%}[t\text{-}1]$ im (t-1)-Moment $\overline{Rb}_{j\%}[t-1] = \sum_{n=l}^{h} \overline{R}_n[t-1] \bigg/ h-l+1$ ist, wobei $f_{belowi\%}[t\text{-}2]$ ein Verhältnis der Anzahl von Benutzern, die Benutzer sind, die $\overline{R}_k[t\text{-}2]\leq\overline{R}a_{i\%}[t\text{-}2]$ erfüllen, in dem System zu der Gesamtzahl von Benutzern im System ist, $c_{i\%}$ ein Algorithmusparameter ist und einen positiven Wert aufweist, $\overline{R}_k[t\text{-}2], k=1,......, K$ ein erhaltener durchschnittlicher Benutzerdurchsatz eines k-ten Benutzers im System in einem (t-2)-Moment ist, $k=1, 2, ...$ und K einen ersten, einen zweiten, ... und einen K-ten Benutzer im System angibt und K die Gesamtzahl von Benutzern im System angibt; und $\overline{Rb}_{j\%}[t-1] = \dfrac{\sum\limits_{n=l}^{h} \overline{R}_n[t-1]}{h-l+1}$ ist, wobei

$\sum\limits_{n=l}^{h} \overline{R}_n[t-1]$ eine Summe durchschnittlicher Benutzerdurchsätze von bei der Berechnung des durchschnittlichen Systemdurchsatzes beteiligten Benutzern angibt, h-l+1 die Anzahl der beim Berechnen des durchschnittlichen Systemdurchsatzes beteiligten Benutzer angibt, $\overline{R}_n[t-1], n=l, l+1, \ldots, h$ ein erhaltener durchschnittlicher Benutzerdurchsatz eines n-ten Benutzers im System in dem (t-1)-Moment ist, n=1, 1+1, ... und h angibt, dass Benutzer im System und die beim Berechnen des durchschnittlichen Systemdurchsatzes beteiligt sind, ein erster Benutzer, (ein 1+1)-ter Benutzer, ... und ein h-ter Benutzer sind, wobei $l \geq 1$ und $h \leq K$ ist.

5. Verfahren nach einem der Ansprüche 1 bis 4, wobei das Erhalten (102) eines Vergabeschemas, das Systemnützlichkeit maximiert, gemäß durchschnittlichen Benutzerdurchsätzen von Benutzern im vorherigen Moment, dem Fairnessparameter im aktuellen Moment und Kanalbedingungen der Benutzer im aktuellen Moment Folgendes umfasst:

Erhalten (1021) von Vergabegewichten der Benutzer im aktuellen Moment gemäß den durchschnittlichen Benutzerdurchsätzen der Benutzer im vorherigen Moment und dem Fairnessparameter im aktuellen Moment; und
Erhalten (1022) des Vergabeschemas, das die Systemnützlichkeit maximiert, gemäß den Vergabegewichten der Benutzer im aktuellen Moment und den Kanalbedingungen der Benutzer im aktuellen Moment.

6. Verfahren nach einem der Ansprüche 1 bis 5, wobei ein durchschnittlicher Zellenranddurchsatz in einem bestimmten Moment ein durchschnittlicher Wert der durchschnittlichen Benutzerdurchsätze von allen oder einem Teil von Randbenutzern im System in dem bestimmten Moment ist; und
ein durchschnittlicher Systemdurchsatz in einem bestimmten Moment ein durchschnittlicher Wert der durchschnittlichen Benutzerdurchsätze von allen oder einem Teil von Benutzern im System in dem bestimmten Moment ist.

7. Verfahren nach Anspruch 4, wobei die durchschnittlichen Benutzerdurchsätze der Benutzer in einem Moment auf eine Alpha-Filterungsweise erhalten werden und eine spezifische Formel folgendermaßen lautet:

$$\overline{R}_k[t-1] = (1-\beta) \cdot \overline{R}_k[t-2] + \beta \cdot R_k[t-1],$$

wobei $R_k[t-1]$ ein Momentan-Benutzerdurchsatz des k-ten Benutzers im (t-1)-Moment ist, der Momentan-Benutzerdurchsatz des k-ten Benutzers im (t-1)-Moment ein Produkt einer Benutzerkanalbedingung des k-ten Benutzers im (t-1)-Moment und der Anzahl von an den k-ten Benutzer im (t-1)-Moment vergebenen Ressourcenblöcken ist, k=1, 2, ... und K einen ersten, einen zweiten, ... und einen K-ten Benutzer im System angibt, K die Gesamtzahl von Benutzern im System angibt und $\beta$ ein Filterfaktor in einem Bereich von (0, 1) ist.

8. Ressourcenvergabevorrichtung, umfassend:

eine Aktualisierungseinheit (801), ausgelegt zum Aktualisieren eines Fairnessparameters in einem aktuellen Moment gemäß einem Fairnessparameter in einem vorherigen Moment, einem Verhältnis von Rand zu Durchschnitt im vorherigen Moment und einem voreingestellten kritischen Wert, wobei das Verhältnis von Rand zu Durchschnitt ein Verhältnis eines durchschnittlichen Zellenranddurchsatzes zu einem durchschnittlichen Systemdurchsatz ist und der Fairnessparameter nicht kleiner als null ist;
eine Erhalteeinheit (802), ausgelegt zum Erhalten eines Vergabeschemas, das Systemnützlichkeit maximiert, gemäß durchschnittlichen Benutzerdurchsätzen von Benutzern im vorherigen Moment, dem Fairnessparameter im aktuellen Moment und Kanalbedingungen der Benutzer im aktuellen Moment; und
eine Vergabeeinheit (803), ausgelegt zum Durchführen von Ressourcenvergabe gemäß dem Vergabeschema, das die Systemnützlichkeit maximiert, so dass das Verhältnis von Rand zu Durchschnitt im aktuellen Moment verglichen mit dem Verhältnis vom Rand zu Durchschnitt im vorherigen Moment dem voreingestellten kritischen Wert näher ist.

9. Vorrichtung nach Anspruch 8, wobei
die Aktualisierungseinheit (801) spezifisch ausgelegt ist zum Aktualisieren des Fairnessparameters im aktuellen Moment gemäß einer Fairnessparameter-Aktualisierungsformel,
wobei die Fairnessparameter-Aktualisierungsformel $\alpha[t]=\max[0,\alpha[t\text{-}1]+c_\alpha\cdot(F_0\text{-}F[t\text{-}1])]$ ist, wobei t einen beliebigen Moment angibt, $\alpha[t]$ einen Fairnessparameter in einem t-Moment angibt, $\alpha[t\text{-}1]$ einen Fairnessparameter in einem (t-1)-Moment angibt, $F[t\text{-}1]$ ein Verhältnis von Rand zu Durchschnitt in einem (t-1)-Moment ist, $F_0$ ein voreingestellter kritischer Wert ist und $c_\alpha$ ein Algorithmusparameter ist und einen positiven Wert aufweist.

10. Vorrichtung nach Anspruch 9, wobei
eine Berechnungsformel für das Verhältnis von Rand zu Durchschnitt $F[t\text{-}1]$ im (t-1)-Moment $F[t\text{-}1]=\overline{Ra}_{i\%}[t\text{-}1]/\overline{Rb}_{j\%}[t\text{-}1]$ ist, wobei $\overline{Ra}_{i\%}[t\text{-}1]$ einen durchschnittlichen Zellenranddurchsatz im (t-1)-Moment angibt, i% (0<i<100) ein Verhältnis der Anzahl von bei der Berechnung des durchschnittlichen Zellenranddurchsatzes beteiligten Randbenutzern zu der Gesamtzahl von Benutzern in einem System angibt, $\overline{Rb}_{j\%}[t\text{-}1]$ einen durchschnittlichen Systemdurchsatz im (t-1)-Moment angibt und j% ($0<j\leq100$) ein Verhältnis der Anzahl von Benutzern, die Benutzer sind, die beim Berechnen des durchschnittlichen Systemdurchsatzes beteiligt sind, zu der Gesamtzahl von Benutzern im System angibt.

11. Vorrichtung nach Anspruch 10, wobei
eine Berechnungsformel des durchschnittlichen Zellenranddurchsatzes $\overline{Ra}_{i\%}[t\text{-}1]$ im (t-1)-Moment $\overline{Ra}_{i\%}[t\text{-}1]=\overline{Ra}_{j\%}[t\text{-}2]\,c_{i\%}\cdot(f_{belowi\%}[t\text{-}2]\text{-}i\%)$ ist; und eine Berechnungsformel des durchschnittlichen Systemdurchsatzes $\overline{Rb}_{j\%}[t\text{-}1]$ im (t-

1)-Moment
$$\overline{Rb}_{j\%}[t-1]=\sum_{n=l}^{h}\overline{R}_n[t-1]\bigg/ h-l+1$$
ist, wobei $f_{belowi\%}[t\text{-}2]$ ein Verhältnis der Anzahl von Benutzern, die Benutzer sind, die $\overline{R}_k[t\text{-}2]\leq\overline{Ra}_{i\%}[t\text{-}2]$ erfüllen, in dem System zu der Gesamtzahl von Benutzern im System ist, $c_{i\%}$ ein Algorithmusparameter ist und einen positiven Wert aufweist, $\overline{R}_k[t\text{-}2],k=1,......,K$ ein erhaltener durchschnittlicher Benutzerdurchsatz eines k-ten Benutzers im System in einem (t-2)-Moment ist, k=1, 2, ... und K einen ersten, einen zweiten, ... und einen K-ten Benutzer im System angibt und K die Gesamtzahl von Benutzern im System angibt; und
$$\overline{Rb}_{j\%}[t-1]=\sum_{n=l}^{h}\overline{R}_n[t-1]\bigg/ h-l+1$$
ist, wobei $\sum_{n=l}^{h}\overline{R}_n[t-1]$ eine Summe durch-

schnittlicher Benutzerdurchsätze von bei der Berechnung des durchschnittlichen Systemdurchsatzes beteiligten Benutzern angibt, h-1+1 die Anzahl der beim Berechnen des durchschnittlichen Systemdurchsatzes beteiligten Benutzer angibt, $\overline{R}_n[t\text{-}1],n=l,l+1,......,h$ ein erhaltener durchschnittlicher Benutzerdurchsatz eines n-ten Benutzers im System in dem (t-1)-Moment ist, n=1, 1+1, ... und h angibt, dass Benutzer im System und die beim Berechnen des durchschnittlichen Systemdurchsatzes beteiligt sind ein erster Benutzer, (ein 1+1)-ter Benutzer, ... und ein h-ter Benutzer sind, wobei $l\geq1$ und $h\leq K$ ist.

12. Vorrichtung nach einem der Ansprüche 8 bis 11, wobei die Erhalteeinheit (802) spezifisch ausgelegt ist zum
Erhalten von Vergabegewichten der Benutzer im aktuellen Moment gemäß den durchschnittlichen Benutzerdurchsätzen der Benutzer im vorherigen Moment und dem Fairnessparameter im aktuellen Moment; und
Erhalten des Vergabeschemas, das die Systemnützlichkeit maximiert, gemäß den Vergabegewichten der Benutzer im aktuellen Moment und den Kanalbedingungen der Benutzer im aktuellen Moment.

13. Vorrichtung nach einem der Ansprüche 8 bis 12, wobei ein durchschnittlicher Zellenranddurchsatz in einem bestimmten Moment ein durchschnittlicher Wert der durchschnittlichen Benutzerdurchsätze von allen oder einem Teil von Randbenutzern im System in dem bestimmten Moment ist; und
ein durchschnittlicher Systemdurchsatz in einem bestimmten Moment ein durchschnittlicher Wert der durchschnittlichen Benutzerdurchsätze von allen oder einem Teil von Benutzern im System in dem bestimmten Moment ist.

14. Vorrichtung nach Anspruch 11, wobei in der Aktualisierungseinheit (801) die durchschnittlichen Benutzerdurchsätze der Benutzer in einem Moment auf eine Alpha-Filterungsweise erhalten werden und eine spezifische Formel Folgendermaßen lautet:

$$\overline{R}_k[t-1] = (1-\beta) \cdot \overline{R}_k[t-2] + \beta \cdot R_k[t-1],$$

wobei $R_k[t-1]$ ein Momentan-Benutzerdurchsatz des k-ten Benutzers im (t-1)-Moment ist, der Momentan-Benutzerdurchsatz des k-ten Benutzers im (t-1)-Moment ein Produkt einer Benutzerkanalbedingung des k-ten Benutzers im (t-1)-Moment und der Anzahl von an den k-ten Benutzer im (t-1)-Moment vergebenen Ressourcenblöcken ist, $k$=1, 2, ... und K einen ersten, einen zweiten, ... und einen K-ten Benutzer im System angibt, K die Gesamtzahl von Benutzern im System angibt und $\beta$ ein Filterfaktor in einem Bereich von (0, 1) ist.

**15.** Vorrichtung nach Anspruch 12, wobei das Erhalten von Vergabegewichten von Benutzern im aktuellen Moment durch die Erhalteeinheit (802) spezifisch die Vergabegewichte der Benutzer im aktuellen Moment gemäß einer Gewichtsberechnungsformel erhält;
wobei die Gewichtsberechnungsformel Folgendermaßen lautet:

$$w_k^{'t} = U_\alpha^{'}(\overline{R_k}[t-1]),$$

wobei t einen beliebigen Moment angibt $w_k^{'t}$ ein Vergabegewicht eines k-ten Benutzers im t-Moment angibt, $k$=1, 2, ... und K einen ersten, einen zweiten, ... und einen K-ten Benutzer im System angibt, K die Gesamtzahl von Benutzern im System angibt und $U'_\alpha(\overline{R}_k[t\text{-}1])$ eine Ableitung einer System-Fair-Nützlichkeitsfunktion

$$U_\alpha(\overline{R_k}[t-1]) = \begin{cases} \dfrac{1}{1-\alpha} \displaystyle\sum_{k=1}^{K} \overline{R}_k^{1-\alpha}[t-1] & \alpha \geq 0, \alpha \neq 1 \\[4mm] \displaystyle\sum_{k=1}^{K} \log \overline{R}_k[t-1] & \alpha = 1 \end{cases}$$

$U_\alpha(\overline{R}_k[t\text{-}1])$ ist; und wobei $\alpha$ einen Fairnessparameter angibt und $\overline{R}_k[t\text{-}1]$ den erhaltenen durchschnittlichen Benutzerdurchsatz des k-ten Benutzers im (t-1)-Moment angibt.

## Revendications

**1.** Procédé d'attribution de ressources, comprenant :

l'actualisation (101) d'un paramètre d'équité à un moment courant en fonction d'un paramètre d'équité à un moment antérieur, d'un rapport bord/moyen au moment antérieur, et d'une valeur critique préétablie, dans lequel le rapport bord/moyen est un rapport d'un rendement de bord de cellule moyen sur un rendement de système moyen, et le paramètre d'équité n'est pas inférieur à zéro ;
l'obtention (102), en fonction de rendements d'utilisateur moyens d'utilisateurs au moment antérieur, du paramètre d'équité au moment courant, et de conditions de canal des utilisateurs au moment courant, d'un plan d'attribution qui maximise l'utilité du système ; et
l'exécution (103) de l'attribution de ressources en fonction du plan d'attribution qui maximise l'utilité du système, de telle sorte que le rapport bord/moyen au moment courant soit plus proche de la valeur critique préétablie en comparaison au rapport bord/moyen au moment antérieur.

**2.** Procédé selon la revendication 1, dans lequel l'actualisation (101) d'un paramètre d'équité à un moment courant en fonction d'un paramètre d'équité à un moment antérieur, d'un rapport bord/moyen au moment antérieur, et d'une valeur critique préétablie comprend :

l'actualisation du paramètre d'équité au moment courant en fonction d'une formule d'actualisation de paramètre d'équité, la formule d'actualisation de paramètre d'équité étant : $\alpha[t] = \max[0, \alpha[t\text{-}1] + c_\alpha \cdot (F_0 - F[t\text{-}1])]$, où
t indique n'importe quel moment, $\alpha[t]$ indique un paramètre d'équité à un moment t, $\alpha[t\text{-}1]$ indique un paramètre d'équité à un moment t-1, $F[t\text{-}1]$ est un rapport bord/moyen à un moment t-1, $F_0$ est une valeur critique préétablie, et $c_\alpha$ est un paramètre algorithmique à valeur positive.

3. Procédé selon la revendication 2, dans lequel une formule de calcul du rapport bord/moyen $F[t\text{-}1]$ au moment t-1 est : $F[t\text{-}1]=\overline{Ra}_{i\%}[t\text{-}1]/\overline{Rb}_{j\%}[t\text{-}1]$, où $\overline{Ra}_{i\%}[t\text{-}1]$ indique un rendement de bord de cellule moyen au moment t-1, i% (0<i<100) indique un rapport du nombre d'utilisateurs de bord impliqués dans le calcul du rendement de bord de cellule moyen par rapport au nombre total d'utilisateurs dans un système, $\overline{Rb}_{j\%}[t\text{-}1]$ indique un rendement de système moyen au moment t-1, et j% ($0 < j \leq 100$) indique un rapport du nombre d'utilisateurs étant des utilisateurs impliqués dans le calcul du rendement de système moyen par rapport nombre total d'utilisateurs dans le système.

4. Procédé selon la revendication 3, dans lequel une formule de calcul du rendement de bord de cellule moyen $\overline{Ra}_{i\%}[t\text{-}1]$ au moment t-1 est $\overline{Ra}_{i\%}[t\text{-}1] = \overline{Ra}_{i\%}[t\text{-}2]\text{-}c_{i\%}\cdot (f_{belowi\%}[t\text{-}2] - i\%)$ ; et

une formule de calcul du rendement de système moyen $\overline{Rb}_{j\%}[t\text{-}1]$ au moment t-1 est

$$\overline{Rb}_{j\%}[t-1] = \sum_{n=l}^{h} \overline{R}_n[t-1] \Big/ h-l+1 \text{ , où}$$

$f_{belowi\%}[t\text{-}2]$ est un rapport du nombre d'utilisateurs étant des utilisateurs satisfaisant $\overline{R}_k[t\text{-}2] \leq \overline{Ra}_{i\%}[t\text{-}2]$ dans le système par rapport au nombre total d'utilisateurs dans le système, $c_{i\%}$ est un paramètre algorithmique à valeur positive, $\overline{R}_k[t\text{-}2]$, $k = 1,......, K$ est un rendement d'utilisateur moyen obtenu d'un $k^{ème}$ utilisateur dans le système à un moment t-2, $k =1, 2, ...,$ et K, indiquant un premier, un deuxième, ..., et un $K^{ème}$ utilisateur dans le système, et K indique le nombre total d'utilisateurs dans le système ; et $\overline{Rb}_{j\%}[t-1] = \sum_{n=l}^{h} \overline{R}_n[t-1] \Big/ h-l+1$ , où

$\sum_{n=l}^{h} \overline{R}_n[t-1]$ indique une somme de rendements d'utilisateur moyens d'utilisateurs impliqués dans le calcul du rendement de système moyen, h-1+1 indique le nombre d'utilisateurs impliqués dans le calcul du rendement de système moyen, $\overline{R}_n[t\text{-}1]$, $n = l,l + 1,......, h$ est un rendement d'utilisateur moyen obtenu d'un $n^{ème}$ utilisateur dans le système au moment t-1, n=1, 1+1, ..., et h, indiquant que les utilisateurs dans le système et impliqués dans le calcul du rendement de système moyen sont un premier utilisateur, un $(1+1)^{ème}$ utilisateur, ..., et un $h^{ème}$ utilisateur, où $l \geq 1$ et h $\leq K$.

5. Procédé selon l'une quelconque des revendications 1 à 4, dans lequel l'obtention (102), en fonction des rendements d'utilisateur moyens d'utilisateurs au moment antérieur, du paramètre d'équité au moment courant, et des conditions de canal des utilisateurs au moment courant, d'un plan d'attribution qui maximise l'utilité du système comprend :

l'obtention (1021) de poids d'attribution des utilisateurs au moment courant en fonction des rendements d'utilisateur moyens des utilisateurs au moment antérieur et du paramètre d'équité au moment courant ; et
l'obtention (1022), en fonction des poids d'attribution des utilisateurs au moment courant et des conditions de canal des utilisateurs au moment courant, du plan d'attribution qui maxime l'utilité du système.

6. Procédé selon l'une quelconque des revendications 1 à 5, dans lequel un rendement de bord de cellule moyen à un certain moment est une valeur moyenne des rendements d'utilisateur moyens de tout ou partie des utilisateurs de bord dans le système au certain moment ; et
un rendement de système moyen à un certain moment est une valeur moyenne des rendements d'utilisateur moyens de tout ou partie des utilisateurs dans le système au certain moment.

7. Procédé selon la revendication 4, dans lequel les rendements d'utilisateur moyens des utilisateurs à un moment sont obtenus à la manière d'un filtrage alpha, et une formule spécifique est :

$$\overline{R}_k[t-1] = (1-\beta)\cdot \overline{R}_k[t-2] + \beta \cdot R_k[t-1],$$

où $R_k[t\text{-}1]$ est un rendement d'utilisateur instantané du $k^{ème}$ utilisateur au moment t-1, le rendement d'utilisateur instantané du $k^{ème}$ utilisateur au moment t-1 est un produit d'une condition de canal d'utilisateur du $k^{ème}$ utilisateur au moment t-1 et du nombre de blocs de ressources attribués au $k^{ème}$ utilisateur au moment t-1, $k = 1, 2, ...,$ et K, indiquant un premier, un deuxième, ..., et un K$^{\text{ème}}$ utilisateur dans le système, K indique le nombre total d'utilisateurs dans le système, et $\beta$ est un facteur de filtre dans une plage de (0,1).

8. Appareil d'attribution de ressources, comprenant :

une unité d'actualisation (801), configurée pour actualiser un paramètre d'équité à un moment courant en fonction d'un paramètre d'équité à un moment antérieur, d'un rapport bord/moyen au moment antérieur, et d'une valeur critique préétablie, dans lequel le rapport bord/moyen est un rapport d'un rendement de bord de cellule moyen sur un rendement de système moyen, et le paramètre d'équité n'est pas inférieur à zéro ;
une unité d'obtention (802), configurée pour obtenir, en fonction des rendements d'utilisateur moyens d'utilisateurs au moment antérieur, du paramètre d'équité au moment courant, et de conditions de canal des utilisateurs au moment courant, un plan d'attribution qui maximise l'utilité du système ; et
une unité d'attribution (803), configurée pour exécuter une attribution de ressources en fonction du plan d'attribution qui maximise l'utilité du système, de telle sorte que le rapport bord/moyen au moment courant soit plus proche de la valeur critique préétablie en comparaison au rapport bord/moyen au moment antérieur.

9. Appareil selon la revendication 8, dans lequel :

l'unité d'actualisation (801) est configurée spécifiquement pour actualiser le paramètre d'équité au moment courant en fonction d'une formule d'actualisation de paramètre d'équité,
dans lequel la formule d'actualisation de paramètre d'équité est : $\alpha[t] = \max[0, \alpha[t\text{-}1] + c_\alpha \cdot (F_0 - F[t\text{-}1])]$, où t indique n'importe quel moment, $\alpha[t]$ indique un paramètre d'équité à un moment t, $\alpha[t\text{-}1]$ indique un paramètre d'équité à un moment t-1, $F[t\text{-}1]$ est un rapport bord/moyen à un moment t-1, $F_0$ est une valeur critique préétablie, et $c_\alpha$ est un paramètre algorithmique à valeur positive.

10. Appareil selon la revendication 9, dans lequel une formule de calcul du rapport bord/moyen $F[t\text{-}1]$ au moment t-1 est : $F[t\text{-}1] = \overline{Ra}_{i\%}[t\text{-}1]/\overline{Rb}_{j\%}[t\text{-}1]$, où $\overline{Ra}_{i\%}[t\text{-}1]$ indique un rendement de bord de cellule moyen au moment t-1, i% ($0 < i < 100$) indique un rapport du nombre d'utilisateurs étant des utilisateurs de bord impliqués dans le calcul du rendement de bord de cellule moyen par rapport au nombre total d'utilisateurs dans un système, $\overline{Rb}_{j\%}[t\text{-}1]$ indique un rendement de système moyen au moment t-1, et j% ($0 < j \leq 100$) indique un rapport du nombre d'utilisateurs étant des utilisateurs impliqués dans le calcul du rendement de système moyen par rapport au nombre total d'utilisateurs dans le système.

11. Appareil selon la revendication 10, dans lequel une formule de calcul du rendement de bord de cellule moyen $\overline{Ra}_{i\%}[t\text{-}1]$ au moment t-1 est $\overline{Ra}_{i\%}[t\text{-}1] = \overline{Ra}_{i\%}[t\text{-}2] - c_{i\%} \cdot (f_{belowi\%}[t\text{-}2] - i\%)$ ; et une formule de calcul du rendement de système moyen $\overline{Rb}_{j\%}[t\text{-}1]$ au moment t-1 est

$$\overline{Rb}_{j\%}[t-1] = \sum_{n=l}^{h} \overline{R}_n[t-1] \Big/ h-l+1 \quad , \text{ où}$$

$f_{belowi\%}[t\text{-}2]$ est un rapport du nombre d'utilisateurs étant des utilisateurs satisfaisant $\overline{R}_k[t\text{-}2] \leq Ra_{i\%}[t\text{-}2]$ dans le système par rapport au nombre total d'utilisateurs dans le système, $c_{i\%}$ est un paramètre algorithmique à valeur positive, $\overline{R}_k[t\text{-}2]$, $k = 1, ......, K$ est un rendement d'utilisateur moyen obtenu d'un $k^{\text{ème}}$ utilisateur dans le système à un moment t-2, $k = 1, 2, ...,$ et K, indiquant un premier, un deuxième, ..., et un K$^{\text{ème}}$ utilisateur dans le système, et K indique le nombre total d'utilisateurs dans le système ; et

$$\overline{Rb}_{j\%}[t-1] = \sum_{n=l}^{h} \overline{R}_n[t-1] \Big/ h-l+1 , \quad \text{où} \quad \sum_{n=l}^{h} \overline{R}_n[t-1] \text{ indique une somme de rendements d'utilisateur}$$

moyens d'utilisateurs impliqués dans le calcul du rendement de système moyen, h-l+1 indique le nombre d'utilisateurs impliqués dans le calcul du rendement de système moyen, $\overline{R}_n[t\text{-}1]$, $n = l, l+1, ......, h$ est un rendement d'utilisateur moyen obtenu d'un $n^{\text{ème}}$ utilisateur dans le système au moment t-1, n = l, l+1, ..., et h, indiquant que les utilisateurs dans le système et impliqués dans le calcul du rendement de système moyen sont un premier utilisateur, un $(l+1)^{\text{ème}}$ utilisateur, ..., et un $h^{\text{ème}}$ utilisateur, où $l \geq 1$ et $h \leq K$.

12. Appareil selon l'une quelconque des revendications 8 à 11, dans lequel l'unité d'obtention (802) est configurée spécifiquement pour :

obtenir des poids d'attribution des utilisateurs au moment courant en fonction des rendements d'utilisateur moyens au moment antérieur et du paramètre d'équité au moment courant ; et obtenir, en fonction des poids d'attribution des utilisateurs au moment courant et des conditions de canal des utilisateurs au moment courant, le plan d'attribution qui maxime l'utilité du système.

**13.** Appareil selon l'une quelconque des revendications 8 à 12, dans lequel un rendement de bord de cellule moyen à un certain moment est une valeur moyenne des rendements d'utilisateur moyens de tout ou partie des utilisateurs de bord dans le système au certain moment ; et
un rendement de système moyen à un certain moment est une valeur moyenne des rendements d'utilisateur moyens de tout ou partie des utilisateurs dans le système au certain moment.

**14.** Appareil selon la revendication 11, dans lequel, dans l'unité d'actualisation (801), les rendements d'utilisateur moyens des utilisateurs à un moment sont obtenus à la manière d'un filtrage alpha, et une formule spécifique est :

$$\overline{R}_k[t-1] = (1-\beta) \cdot \overline{R}_k[t-2] + \beta \cdot R_k[t-1],$$

où $R_k[t\text{-}1]$ est un rendement d'utilisateur instantané du k$^{ème}$ utilisateur au moment t-1, le rendement d'utilisateur instantané du k$^{ème}$ utilisateur au moment t-1 est un produit d'une condition de canal d'utilisateur du k$^{ème}$ utilisateur au moment t-1 et du nombre de blocs de ressources attribués au k$^{ème}$ utilisateur au moment t-1, $k$ = 1, 2, ..., et K, indiquant un premier, un deuxième, ..., et un K$^{ème}$ utilisateur dans le système, K indique le nombre total d'utilisateurs dans le système, et $\beta$ est un facteur de filtre dans une plage de (0,1).

**15.** Appareil selon la revendication 12, dans lequel l'obtention, par l'unité d'obtention (802), de poids d'attribution d'utilisateurs au moment courant consiste spécifiquement en l'obtention des poids d'attribution des utilisateurs au moment courant en fonction d'une formule de calcul de poids ;
dans lequel la formule de calcul de poids est :

$$w_k{}' = U_\alpha'(\overline{R_k}[t-1]),$$

où t indique n'importe quel moment, $w_k{}'$ indique un poids d'attribution d'un k$^{ème}$ utilisateur au moment t, $k$ = 1, 2,..., et K, indiquant un premier, un deuxième, ..., et un K$^{ème}$ utilisateur dans le système, K indique le nombre total d'utilisateurs dans le système, et $w_k{}' = U_\alpha'(\overline{R_k}[t-1])$ est une dérivée d'une fonction d'utilité équitable de

système $U_\alpha(\overline{R_k}[t\text{-}1])$ ; and $U_\alpha(\overline{R_k}[t-1]) = \begin{cases} \dfrac{1}{1-\alpha}\sum\limits_{k=1}^{K}\overline{R}_k^{1-\alpha}[t-1] & \alpha \geq 0, \alpha \neq 1 \\ \sum\limits_{k=1}^{K}\log\overline{R}_k[t-1] & \alpha = 1 \end{cases}$ , où $\alpha$ indique un paramètre

d'équité, et $\overline{R}_k[t\text{-}1]$ indique le rendement d'utilisateur moyen obtenu du k$^{ème}$ utilisateur au moment t-1.

Update a fairness parameter at a current moment according to a fairness parameter at a previous moment, an edge-to-average ratio at the previous moment, and a preset critical value, where the edge-to-average ratio is a ratio of an average cell edge throughput to an average system throughput, and the fairness parameter is not less than zero

101

Obtain, according to average user throughputs of users at the previous moment, the fairness parameter at the current moment, and channel conditions of the users at the current moment, an allocation scheme that maximizes system utility

102

Perform resource allocation according to the allocation scheme that maximizes the system utility, so that the edge-to-average ratio at the current moment is close to the preset critical value when compared with the edge-to-average ratio at the previous moment

103

FIG. 1

FIG. 2

Obtain allocation weights of users at a current
moment according to average user throughputs of the
users at a previous moment and a fairness parameter
at the current moment

1021

Obtain, according to the allocation weights of the
users at the current moment and channel conditions
of the users at the current moment, an allocation
scheme that maximizes system utility

1022

FIG. 3

Update a fairness parameter α at a current moment according
to a fairness parameter α at a previous moment and an edge-
to-average ratio F at the previous moment

401

Obtain, according to average user throughputs of users at the
previous moment, the fairness parameter at the current
moment, and channel conditions of the users at the current
moment, an allocation scheme that maximizes system utility

402

Perform resource allocation according to the allocation
scheme that maximizes the system utility, so that the edge-to-
average ratio at the current moment is closer to a preset
critical value $F_0$ when compared with the edge-to-average
ratio at the previous moment

403

FIG. 4

Obtain allocation weights $w_k^t$ of users at a current moment according to average user throughputs $\overline{R}_k[t-1]$ of the users at a previous moment and a fairness parameter $\alpha[t]$ at the current moment

4021

Obtain, according to the allocation weights $w_k^t$ of the users at the current moment and channel conditions of the users at the current moment, an allocation scheme that maximizes system utility

4022

FIG. 5

FIG. 6

FIG. 7

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090116439 A1